# EUROPEAN PATENT SPECIFICATION

(11) **EP 1 008 303 B1**
(45) Date of publication and mention of the grant of the patent: **20.04.2005**
(21) Application number: 99124052.4
(22) Date of filing: 09.12.1999
(51) Int. Cl.: A23C 9/146, A23L 1/304

(54) **Novel milk-derived magnesium/calcium materials and methods for producing the same**
NEUE, VON MILCH ABGELEITETE MAGNESIUM/CALCIUM-MATERIALIEN UND VERFAHREN ZU DEREN HERSTELLUNG
NOUVEAUX MATERIAUX MAGNESIUM/CALCIUM ISSUS DU LAIT ET METHODES DE PRODUCTION DE CES MATERIAUX

(30) Priority: 10.12.1998 JP 35083398
(43) Date of publication of application: 14.06.2000
(73) Proprietor: SNOW BRAND MILK PRODUCTS, CO., LTD., Sapporo-shi Hokkaido 065-0043 (JP)
(72) Inventor: Shigematsu, Akinori, Kawagoe-shi, Saitama-ken (JP); Kotani, Masanori, Sayama-shi, Saitama-ken (JP); Toba, Yasuhiro, Musahino-shi, Tokyo (JP); Tomizawa, Akira, Iruma-shi, Saitama-ken (JP)
(74) Representative: VOSSIUS & PARTNER

(56) References cited:
- EP-A- 0 153 967
- DE-A- 3 046 361
- FR-A- 2 428 405
- GB-A- 2 085 749
- GB-A- 2 113 064
- US-A- 4 363 880
- US-A- 5 759 586

## Description

The present invention relates to novel milk-derived magnesium/calcium materials which can be used for magnesium and calcium fortification. Furthermore, the present invention relates to methods for the production of milk-derived magnesium/calcium materials, in which magnesium and calcium in a desired ratio are efficiently and easily isolated and recovered from effluents from the regeneration of cation-exchange resins used to desalt or soften various milk or milk substances in conventional industrial operations.

The number of people suffering from various bone diseases such as osteoporosis, bone fractures and lumbago has been on the rise in recent years because of the aging population. The reasons for this increase are said to be an insufficient calcium intake, reduced calcium absorbing capability, or hormone imbalances after menopause. It is said that in order to prevent bone diseases associated with aging, it is necessary to take calcium in a form which is highly absorbable in the body, as much as possible in all life stages, i.e., from growth to old age. However, it is difficult to have sufficient calcium intake from the average Japanese diet, and according to a recent national survey on nutrition conducted by the Japanese Ministry of Heath and Welfare, calcium requirements are not being met.

Under these circumstances, a number of calcium materials or supplements have been developed and widely used in food products in an attempt to increase calcium intake as much as possible. Moreover, it has been reported that amorphous calcium derived from milk, which has casein-binding calcium or colloidal calcium as an effective component, is highly utilizable in the body (Nutr. Rep. Int., Vol. 21, p.6738, 1980).

However, the calcium content in milk is much higher than that of other minerals. In particular, the calcium content is about 10 times higher than the magnesium content. In fact, many of the milk-derived calcium materials on the market contain over 15 times more calcium than magnesium.

Magnesium, over half of which is distributed in the bones, has an essential life-sustaining physiological activity. It is known that nervous disorders or increasing fatigue will occur if insufficient intake of magnesium continues, yet magnesium levels in the body are at present low and insufficient. Specifically, current magnesium intake is deemed to be about 65% of the recommended amount, i.e., 300 mg for adult females and 350 mg for adult males. Thus, the intake is evidently insufficient. Moreover, the chances of a substantial increase in intake in the future appear slim.

Both magnesium and calcium are classified as alkaline-earth metals and become divalent cations when activated in the body. Thus, physicochemical characteristics of both elements are similar. On the other hand, the physiological action on blood vessels are entirely different from one to another. Magnesium and calcium work antagonistically. That is, one relaxes arteries while the other contracts the same. Thus, tension in the coronary artery rises and blood pressure increases, and the probability of vasospasm becomes high when the magnesium level is to low relative to that of calcium. Conversely, blood vessels relax and blood pressure decreases when the magnesium level increases in relation to calcium. Therefore, a good balance between trace minerals in the blood is an important condition for maintaining human health. A 1:2 ratio, by weight, of magnesium and calcium intake for adults is proposed as being ideal.

It is also said that calcium intake should be increased from childhood to adolescence.

In recent years, attention has focused primarily on calcium intake, and a number of drinks and food products for calcium supplement have been developed. However, the magnesium content has never been taken into consideration in these products. As a result, the ratio of magnesium intake relative to calcium intake has become considerably low. The major components of magnesium supplements which are commercially available today are primarily inorganic magnesium salts approved as food additives. However, use of these magnesium salts is inevitably limited due to regulations for their use or because of their taste. New magnesium materials such as a mixture of magnesium carbonate and lemon juice, magnesium carbonate derived from coral and the like are commercially available, but again their use is limited because of their peculiar taste.

Desalting is generally carried out, in manufacturing lactose or milk protein materials, using milk as the raw material. Examples of industrial methods of desalting milk include electrodialysis (e.g. FR-A-2 428 405), treatment with ion-exchange resins, a combination of electrodialysis and ion-exchange and a combination of nanofiltration and ion-exchange. In recent years, it has become necessary to reduce the amount of the regeneration effluents from ion-exchange resins because of environmental concerns. For this reason, a combination of electrodialysis and ion-exchange or a combination of electrodialysis and softening have been proposed (Japanese Patent Publication No. 512743-97). A combination of nanofiltration and treatment with ion-exchange resins is also becoming prevalent.

Ion-exchange resins adsorb minerals in milk, such as magnesium and calcium. Namely, in the desalting process using cation-exchange resins, when milk is passed through H⁺-type strongly acidic cation-exchange resins, cations such as sodium, potassium, magnesium and calcium in the milk and hydrogen ions on the resins are exchanged and the cations are adsorbed onto the resins. Also, in the softening process using cation-exchange resins, when milk is passed through Na⁺-type or K⁺-type strongly acidic cation-exchange resins, polyvalent cations such as magnesium and calcium in the milk and sodium ions or potassium ions on the resins are exchanged and the cations are adsorbed onto the resins. Then, magnesium and calcium adsorbed on these cation-exchange resins are released from the resins upon regeneration and discarded in the regeneration effluent. In other words, the problem is that calcium and magnesium, which are abundant in milk and are highly absorbable, are discarded as waste in large quantities in the milk desalting process.

The present inventors intensively studied ways to recover and effectively utilize magnesium and calcium derived from milk or milk substances, which are adsorbed on cation-exchange resins in the desalting or softening process, then released from the resins upon regeneration to be discarded in large quantities in the regeneration effluent. As a result, the present inventors found that when milk or milk substances are softened using a combination of weakly acidic cation-exchange resin and strongly acidic cation-exchange resin, the ratio by weight of magnesium to calcium adsorbed on the strongly acidic cation-exchange resin is higher than the ratio found in milk. The present inventors focused on this finding.

The present inventors then found that the magnesium/calcium salts are readily recovered by regenerating the strongly acidic cation-exchange resin with adsorbed magnesium and calcium using a concentrated electrodialysis fluid, which is obtained as a by-product from the electrodialysis of desalted or softened milk or milk substances and contain a large amount of milk organic acids. The pH of the regeneration effluent is adjusted to a weakly acidic pH using a sodium hydroxide solution or the regeneration effluent of anion-exchange resins, then the resulting precipitate is centrifuged.

Furthermore, the present inventors have found that magnesium and calcium salts thus recovered are a pure milk-derived product, form no distinct crystalline structure, and are tasteless, odorless, and highly absorbable in the body, and as such are excellent substances for use as mineral materials for drugs, drinks, foods and feeds. The present invention is thus completed.

Accordingly, an objective of the present invention is to provide a method of producing the novel milk-derived magnesium/calcium materials easily and. effectively from by-products which are discarded in conventional industrial processes for desalting or softening various milk or milk substances. Another objective of the present invention is to provide novel milk-derived magnesium/calcium materials which can be used for magnesium and calcium fortification obtainable by the process stated above.
Figure 1 shows the X-ray diffraction pattern for the milk-derived magnesium/calcium material of the present invention in Example 2.
Figure 2 shows the X-ray diffraction pattern for the commercial milk-derived calcium material (Alamin 995, Japan Protein Co., Ltd.) in Example 2.
Figure 3 shows the X-ray diffraction pattern of calcium citrate in Example 2.

In the present invention, milk-derived magnesium/calcium materials are produced by eluting magnesium and calcium being adsorbed onto a strongly acidic cation-exchange resin, which are obtained in the process of desalting or softening milk by passing milk or milk substances through a weakly acidic cation-exchange resin and a strongly acidic cation-exchange resin, and then recovering the resulting magnesium/calcium salts

Weakly acidic cation-exchange resins to be used in the present invention are not particularly restricted. Any resins which are physically strong, react even in low pH ranges, and have a large exchange volume and highly efficient cation-exchange ability can be used. Examples of weakly acidic cation-exchange resins having these characteristics include commercially available resins such as Diaion WK11 (Mitsubishi Chemical Co., Ltd.), Diaion WK40 (Mitsubishi Chemical Co., Ltd.), Duolite C-470C (Sumitomo Chemical Co., Ltd.), Duolite C-476 (Sumitomo Chemical Co., Ltd.), Dowex MWC-1 (Dow Chemical Japan Ltd.) and Amberlite IRC-76 (Organo Corp.).

Strongly acidic cation-exchange resins to be used in the present invention are not particularly restricted. Any resins used in general water treatment or the like can be used. However, resins which have highly selective adsorbability for polyvalent ions, physical tolerance, and excellent cation-exchange efficiency, and a cross-linkage level of 8 to 16% (% by weight divinylbenzene) can be preferably used. Examples of strongly acidic cation-exchange resins having these characteristics include commercially available resins such as Diaion SK112 (Mitsubishi Chemical Co., Ltd.), Diaion PK228 (Mitsubishi Chemical Co., Ltd.), Duolite C-20 (Sumitomo Chemical Co., Ltd.), Duolite C-20HC (Sumitomo Chemical Co., Ltd.), Dowex HGR-W2 (Dow Chemical Japan Ltd.), Amberlite IR120B (Organo Corp.), Amberlite IR124 (Organo Corp.), and Amberlite 252 (Organo Corp.).

The volume ratio of weakly acidic cation-exchange resin to strongly acidic cation-exchange resin is not particularly restricted. Since weakly acidic cation-exchange resin adsorbs more calcium than magnesium, the calcium ratio in a solution to be treated with strongly acidic cation-exchange resin decreases as the volume ratio of weakly acidic cation-exchange resin increases. Accordingly, the ratio by weight of magnesium to calcium adsorbed onto strongly acidic cation-exchange resin increases as the volume ratio of weakly acidic cation-exchange resin increases, and thus the ratio by weight of magnesium contained in the eluents from this strongly acidic cation-exchange resin also increases. However, if the resin volume ratios are exceedingly high, recovery of calcium and magnesium from strongly acidic cation-exchange resin will be very poor. Therefore, for example, when cheese whey is treated with weakly acidic cation-exchange resin and strongly acidic cation-exchange resin, it is preferable to set the volume ratio of weakly acidic cation-exchange resin to strongly acidic cation-exchange resin to about 0.5 to 3. For example, the ratio by weight of magnesium to calcium was in the range between 7:1 to 2:1 when the volume ratio of weakly acidic cation-exchange resin to strongly acidic cation-exchange resin was set to about 0.5 to 3. When the ratio by weight of weakly acidic cation-exchange resin to strongly acidic cation-exchange resin was 3, the volume of the recovered milk magnesium/calcium material was about 35% of what was attained when the volume ratio of weakly acidic cation-exchange resin to strongly acidic cation-exchange resin was 0.5.

As for eluants to be used for the elution of magnesium and calcium being adsorbed onto strongly acidic cation-exchange resin, preferable examples include concentrated electrodialysis liquids containing a large amount of monovalent ions such as sodium and potassium and organic acid such as citric acid, Iactic acid and phosphoric acid, which can be obtained when milk or milk substances being desalted and softened using weakly acidic cation-exchange resin and strongly acidic cation-exchange resin are additionally desalted using electrodialysis or the like. Excessively high or excessively low ion concentrations of the concentrated electrodialysis liquids decrease reactivation efficiency. Accordingly, it is preferable to adjust the ion concentrations of the concentrated electrodialysis liquids to have a conductivity ranging from 90 to 200 mS/cm.

Strongly acidic cation-exchange resins are reactivated by eluting magnesium and calcium being adsorbed onto strongly acidic cation-exchange resins using these eluants and the resulting strongly acidic cation-exchange resins can be reused for desalting and softening processes. Namely, regeneration effluents resulting from reactivating strongly acidic cation-exchange resins become the raw materials for the milk-derived magnesium/calcium materials of the present invention.

To the resulting recovered solution containing magnesium and calcium, an effluent resulting from reactivating anion-exchange resin, a sodium hydroxide solution, or the like is added to adjust the pH to 6.0 to 7.0, then the admixture is stirred for more than 30 minutes to precipitate magnesium/calcium citrate or phosphate. The resulting precipitate is recovered, for example, by centrifugation and thus milk-derived magnesium/calcium materials of the present invention can be obtained.

Impurities such as monovalent ions can be readily removed by resuspending the obtained magnesium/calcium salt precipitate in water and then repeating treatments such as membrane isolation and centrifugation.

The milk-derived magnesium/calcium materials thus obtained contain at least more than 13% by weight of magnesium and calcium, have no distinct crystalline structure like the minerals in milk and are tasteless and odorless. In addition, they taste good when mixed with other food materials since the ratios of component organic acids are similar to milk or milk substances.

The term "milk or milk substances" in the present invention denotes filtrates or whey obtained upon ultrafiltration of whey, whole milk, skim milk and butter milk, whey, lactose crystallization mother liquid, or the like.

In the present invention, magnesium/calcium materials can be produced industrially in a large amount and at low cost by recovering magnesium/calcium salts from regeneration effluents from cation-exchange resins, which are recovered as a by-product during the process of desalting or softening various milk substances using cation exchange resins in the production of desalted whey or desalted lactose crystallization mother liquid.

The milk-derived magnesium/calcium materials produced as mentioned above are tasteless, odorless, and highly absorbable in the body, and accordingly they may be widely used for magnesium and calcium fortification.

The milk-derived magnesium/calcium materials of the present invention can be obtained by recovering magnesium/calcium salts from regeneration effluents from strongly acidic cation-exchange resin being used for desalting or softening milk or milk substances. The resulting milk or milk substances, from which magnesium and calcium are removed, are not different from ordinary desalted milk or milk substances and can be used as desalted whey, desalted permeate, , desalted lactose crystallization mother liquid, or the like.

The present invention will be explained in detail in the following Examples.

### EXAMPLES

In the Examples, magnesium was measured using Magnesium B-Test Wako (Wako Pure Chemicals Co., Ltd.) and calcium was measured by the EDTA method (Determination of calcium and magnesium in milk by EDTA titration, Journal of Dairy Science, Vol. 44, No. 6, 1961). X-ray diffraction was carried out using Rint Ultima + System 3KW (Rigaku Denki Co., Ltd.) at a scanning angle of 20-70 degrees, scanning speed of 8 degrees/minute, intensity of 40 KV and 20 mA.

### EXAMPLE 1

40 kg of cheese whey isolated during the manufacture of Gouda cheese using 50 kg of cow milk as a raw material were passed through 2,000 ml of weakly acidic cation-exchange resin (Diaion WK40, Mitsubishi Chemical Co., Ltd.), then 1,500 ml of strongly acidic cation-exchange resin (Diaion SK112, Mitsubishi Chemical Co., Ltd.) (rate: 9,200 ml of whey/1,000 ml of resin/hour) to soften the whey. This softened whey was desalted by batch electrodialysis until a conductivity of 0.8 mS/cm was attained to obtain a concentrated electrodialysis liquid as a by-product. Next, this concentrated electrodialysis liquid was concentrated using an evaporator until the conductivity of 120 mS/cm was attained. Next, the strongly acidic cation-exchange resin used for softening the whey was regenerated using 2,400 ml of the resulting concentrated electrodialysis liquid and a regeneration effluent having a conductivity of more than 50 mS/cm was recovered.

A 2.5 N sodium hydroxide solution was slowly added to this effluent to adjust the pH to 6.8 and the admixture was stirred for 30 minutes to obtain an opaque precipitate of calcium/magnesium salts. The precipitate was recovered by centrifugation (1,500 g, 10 minutes), water was added to the recovered precipitate to make the total weight 1,000 g, then 180 g of white pasty calcium/magnesium salts were obtained by recentrifugation (1,500 g, 10 minutes).

The resulting white pasty calcium/magnesium salt preparation was a milk-derived magnesium/calcium material having a solid ratio of 8.7% by weight, magnesium content of 9% by weight, calcium content of 4.5% by weight, and a ratio of magnesium:calcium of 2:1.

### EXAMPLE 2

60 kg of cheese whey isolated during the manufacture of Gouda cheese using 70 kg of cow milk as a raw material were passed through 750 ml of weakly acidic cation-exchange resin (Diaion WK40, Mitsubishi Chemical Co., Ltd.), then 1,500 ml of strongly acidic cation-exchange resin (Diaion SK112, Mitsubishi Chemical Co., Ltd.) (rate: 9,200 ml of whey/1,000 ml of resin/hour) to desalt the whey. Then, the strongly acidic cation-exchange resin used for desalting the whey was reactivated using 2,400 ml of concentrated electrodialysis liquid similar to those used in Example 1, and a regeneration effluent having a conductivity of more than 50 mS/cm was recovered.

A 2.5 N sodium hydroxide solution was slowly added to this effluent to adjust the pH to 6.8 and the admixture was stirred for 30 minutes to obtain an opaque precipitate of calcium/magnesium salts. The precipitate was recovered by centrifugation (1,500 g, 10 minutes), water was added to the recovered precipitate to make the total weight 1,000 g, then 270 g of white pasty calcium/magnesium salts were obtained by recentrifugation (1,500 g, 10 minutes).

The resulting white pasty calcium/magnesium salt preparation was a milk-derived magnesium/calcium material having a solid ratio of 8.2% by weight, magnesium content of 3% by weight, calcium content of 21% by weight, and a ratio of magnesium:calcium of 1:7.

This white pasty calcium/magnesium salt preparation was freeze-dried to make powder and its X-ray diffraction pattern was studied. Also, X-ray diffraction pattern of a commercial milk-derived calcium material (Alamin 995, Japan Protein Co., Ltd.) and calcium citrate were similarly examined for comparison.

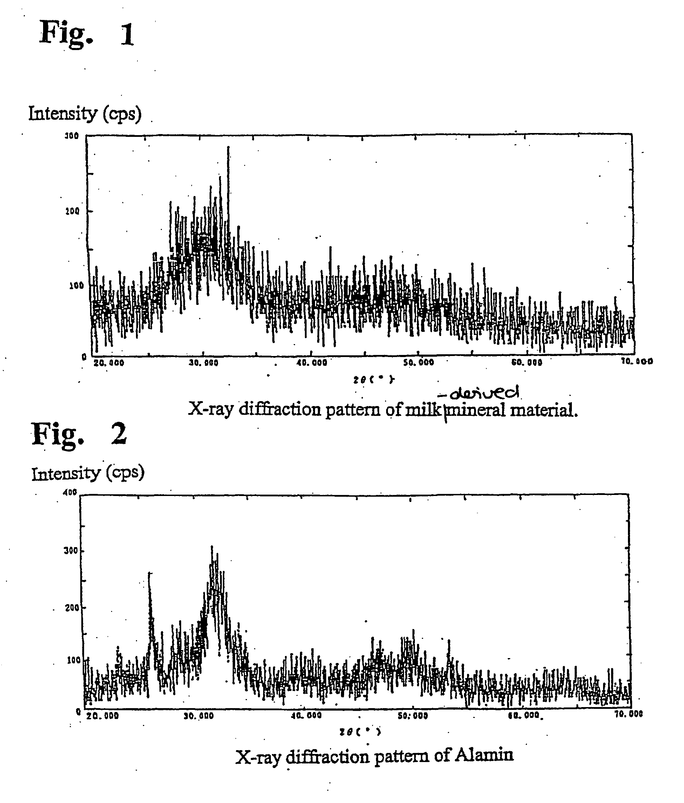

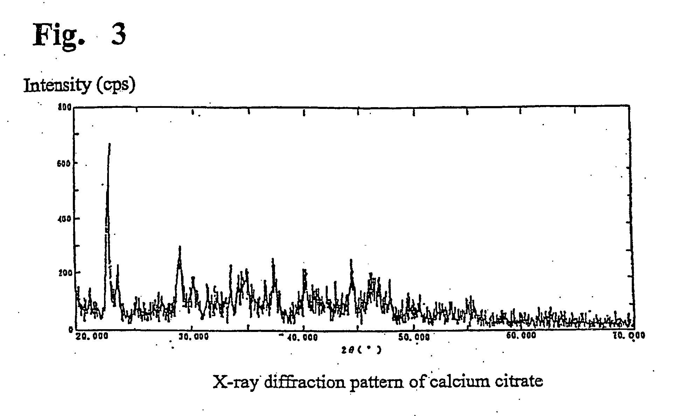

The resulting X-ray diffraction patterns are shown in Figure 1 for the milk-derived magnesium/calcium material of the present invention, in Figure 2 for the commercial milk-derived calcium material (Alamin 995) and in Figure 3 for calcium citrate.

The results showed that this calcium/magnesium salt preparation did not have a distinct crystalline structure while the commercial milk-derived calcium material (Alamin 995) and the citric acid calcium showed a crystalline structure.

### EXAMPLE 3

24 kg of cheese whey isolated during the manufacture of Gouda cheese using 30 kg of cow milk as a raw material were passed through 400 ml of weakly acidic cation-exchange resin (Amberlite IRC-76, H⁺ form, Organo Co., Ltd.), 1,300 ml of strongly acidic cation-exchange resin (Amberlite IR-120B, H⁺ form, Organo Co., Ltd.), then strongly basic anion-exchange resin (Diaion SA20AP, OH⁻ form, Mitsubishi Chemical Co., Ltd.) (rate: 9,200 ml of whey/1,000 ml of resin/hour) to desalt the whey. Then, the strongly acidic cation-exchange resin used for desalting the whey was washed with deionized water, then regenerated using 1,700 ml of a 1 M hydrochloric acid solution, and a regeneration effluent having a conductivity of more than 50 mS/cm was recovered.

A regeneration effluent of the anion exchange resin was slowly added to this effluent, the pH was adjusted to 6.8 and the admixture was stirred for 30 minutes to produce an opaque precipitate of calcium/magnesium salts. The precipitate was recovered by centrifugation (1,500 g, 10 minutes), water was added to the recovered precipitate to make the total weight 1,000 g, then 130 g of white pasty calcium/magnesium salts were obtained by recentrifugation (1,500 g, 10 minutes).

The resulting white pasty calcium/magnesium salt preparation was a milk-derived magnesium/calcium material having a solid ratio of 7.6% by weight, magnesium content of 4% by weight, calcium content of 19% by weight, and a ratio of magnesium:calcium of 1:5.

### EXAMPLE 4

370 kg of skim milk (8.9% total solids, 3.31% proteins, 4.74% lactose, 0.77% minerals, of which magnesium was 112 mg% and calcium was 1,347 mg%, were treated with an ultrafiltration membrane having a cut-off molecular weight of 10 kDa to concentrate it about 1.7 times. As a result, 150 kg of permeated liquid (5.12% total solids, 0.17% proteins, 4.49% lactose, 0.45% minerals of which magnesium was 240 mg% and calcium was 547 mg%) were obtained. This permeated liquid was passed through 3,000 ml of weakly acidic cation-exchange resin (Duolite C-470C, H⁺ form, Sumitomo Chemical Corp.), 8,000 ml of strongly acidic cation-exchange resin (Amberlite IR-120B, H⁺ form, Organo Co., Ltd.), then 11,000 ml of strongly basic anion-exchange resin (Diaion SA20AP, OH⁻ form, Mitsubishi Chemical Co., Ltd.) (rate: 9,200 ml of permeated liquid/1,000 ml of resin/hour) to desalt the permeated liquid. Then, the strongly acidic cation-exchange resin used for desalting the permeated liquid was washed with deionized water, then regenerated using 10,000 ml of a 1 M hydrochloric acid solution. Thus, a regeneration effluent having a conductivity of more than 50 mS/cm was recovered.

To this regeneration effluent, a regeneration effluent of the anion exchange resin was slowly added with stirring, the pH was adjusted to 6.8 and the admixture was stirred for 30 minutes to obtain an opaque precipitate of calcium/magnesium salts. The precipitate was recovered by centrifugation (1,500 g, 10 minutes), water was added to the recovered precipitate to make the total weight 4,000 g, then 670 g of white pasty calcium-magnesium salts were obtained by recentrifugation (1,500 g, 10 minutes)

The resulting white pasty calcium/magnesium salt preparation was a milk magnesium/calcium material having a solid ratio of 7.6% by weight, magnesium content of 7.2% by weight, calcium content of 13.7% by weight, and a ratio of magnesium:calcium of 1:2. It contained no monovalent minerals such as sodium and potassium and no lactose.

### EXAMPLE 5

1,062 g of skim milk powder were mixed with an emulsion consisting of 830 g of a milk-derived magnesium/calcium material obtained as described in Example 1, 154 g of salt-free butter and 7,954 g of blending water to prepare a mix. This mix was stirred (7,000 rpm, 10 minutes) using a homomixer, homogenized (150 kg/cm²), pasteurized by heating at 120°C for 3 seconds, then cooled to 4°C to produce about 10 kg of milk fortified with milk-derived magnesium/calcium material.

This milk fortified with milk-derived magnesium/calcium material contained 75 mg of magnesium and 150 mg of calcium per 100 g, and had a ratio of magnesium:calcium of 1:2 by weight. Accordingly, a daily intake of 2 cups (400 ml) of this fortified milk can meet the recommended daily intake for magnesium and daily nutritional requirement for calcium.

### EXAMPLE 6

777.1 g of blending water were added to 64.4 g of a material in which milk-derived magnesium/calcium materials obtained as described in Example 3 and Example 4 were mixed in a ratio of 1:2, 80.9 g of liquid sugar, 20 g of honey, 5.5 g of citric acid, 5 g of 5-times-concentrated grapefruit juice and 2.5 g of grapefruit flavor to prepare a drink mix. This mix was treated with a fine filtration membrane having a pore size of 1.4 microns (1P19-40, Membralox Co., Ltd.) to remove microorganisms, and thus about 1,000 g of a milk-derived magnesium/calcium supplement drink was produced.

This milk-derived magnesium/calcium supplement drink contained 400 mg% magnesium and 1,200 mg% calcium. Accordingly, a daily intake of 500 ml of this drink can meet 2/3 of the recommended daily intake for magnesium and daily nutritional requirement for calcium. Furthermore, the drink was flavorful, having a grapefruit flavor when chilled, and thus fully satisfactory from an organoleptic view point.

### EXPERIMENTAL EXAMPLE 1

An animal experiment was carried out to evaluate the absorbability of a milk-derived magnesium/calcium material of the present invention. Experimental animals (8-week-old SD female rats) were divided into two groups (6 animals each), i.e., one group fed a milk-derived magnesium/calcium material obtained as described in Example 2 (experimental group) and the other group fed magnesium chloride and a commercial milk-derived calcium material (Alamin 995, Japan Protein Co., Ltd.) (control group). The constituents of feeds used in the experiment are shown in Table 1.

The contents of magnesium, calcium and phosphorus in the feeds for both groups were adjusted to 0.07% by weight, 0.5% by weight and 0.4% by weight, respectively.

**Table 1**

| | Experimental group | Control group |
|---|---|---|
| Casein | 20.00 (g/100 g) | 20.00 (g/100 g) |
| Corn starch | 15.00 | 15.00 |
| Cellulose | 5.00 | 5.00 |
| Corn oil | 5.00 | 5.00 |
| Sucrose | 47.22 | 46.90 |
| DL-Methionine | 0.30 | 0.30 |
| Material in Example 2 | 2.38 | - |
| Alamin 995 | - | 2.00 |
| Magnesium chloride 6H₂O | - | 0.48 |
| Potassium dihydrogenphosphate | 0.40 | 0.62 |
| Mineral mix* | 3.50 | 3.50 |
| Vitamin mix | 1.00 | 1.00 |
| Choline bitartrate | 0.20 | 0.20 |

| | | |
|---|---|---|
| * Calcium, magnesium and phosphate are not contained. | | |

The animals were fed each feed for 10 days, after which the intake-discharge test was carried out for 4 days to calculate apparent absorbabilities for magnesium and calcium.

The results are shown in Table 2.

**Table 2**

| | Experimental group | Control group |
|---|---|---|
| Magnesium | 61.7 ± 2.2* (%) | 57.8 ± 2.0 (%) |
| Calcium | 46.8 ± 2.2* | 42.9 ± 1.8 |

The figures shown are averages ± standard variations. The symbol * denotes that there was a significant difference between the experimental group and the control group.

The results showed that both apparent magnesium absorbability and apparent calcium absorbability were significantly higher in the experimental group. Accordingly, it is evident that the milk-derived magnesium/calcium material of the present invention is a material having an excellent absorbability.

## Claims

1. A method for producing a milk-derived magnesium/calcium material wherein milk or milk substances are passed through weakly acidic cation-exchange resin, then strongly acidic. cation-exchange resin, after which magnesium and calcium adsorbed onto the strongly acidic cation-exchange resin are eluted and recovered as magnesium and calcium salts.

2. The method according to claim 1 wherein the magnesium and calcium adsorbed onto the strongly acidic cation-exchange resin are eluted using a solution containing minerals and organic acids which are removed from milk or milk substances, and obtained by passing the milk or milk substances through weakly acidic cation-exchange resin, then strongly acidic cation-exchange resin, and then electrodialysing the resulting effluent.

3. The method according to claim 1 or 2 wherein the pH of the solution containing magnesium and calcium being eluted from the strongly acidic cation-exchange resin is adjusted to 6.0 to 7.0 to recover the magnesium and calcium salts as a precipitate.

4. The method according to claim 1, 2 or 3 wherein the recovered magnesium and calcium salts are suspended in water, then further purified by membrane separation or centrifugation.

5. A milk-derived magnesium/calcium material having the following characteristics:
(1) magnesium and calcium content is more than 13% by weight of the total solids, and
(2) magnesium and calcium salts have no distinct crystalline structure, whereby the milk-derived magnesium/calcium material is obtainable by a method according to any of claims 1 to 4.

6. Use of the milk-derived magnesium/calcium material of claim 6 for the preparation of a prophylactic drink for patients in need of an increased magnesium and calcium intake.

## Patentansprüche

1. Verfahren zur Herstellung eines von Milch abgeleiteten Magnesium/Calcium-Materials, wobei Milch oder Milchsubstanzen durch schwach saures Kationenaustauschharz, dann durch stark saures Kationenaustauschharz geleitet werden, wonach das an das stark saure Kationenaustauschharz adsorbierte Magnesium und Calcium eluiert und als Magnesium- und Calciumsalze gewonnen werden.

2. Verfahren gemäß Anspruch 1, wobei das an das stark saure Kationenaustauschharz adsorbierte Magnesium und Calcium unter Verwendung einer Lösung eluiert werden, die Mineralien und organische Säuren enthält, die aus Milch oder Milchsubstanzen entfernt sind, und durch Leiten der Milch oder Milchsubstanzen durch schwach saures Kationenaustauschharz, dann durch stark saures Kationenaustauschharz und anschließendes Elektrodialysieren des resultierenden Effluenten erhalten wird.

3. Verfahren gemäß Anspruch 1 oder 2, wobei der pH-Wert der von dem stark sauren Kationenaustauschharz eluiertes Magnesium und Calcium enthaltenden Lösung auf 6,0 bis 7,0 eingestellt wird, um die Magnesium- und Calciumsalze als einen Niederschlag zu gewinnen.

4. Verfahren gemäß Anspruch 1, 2 oder 3, wobei die gewonnenen Magnesium- und Calciumsalze in Wasser suspendiert, dann weiter durch Membrantrennung oder Zentrifugation gereinigt werden.

5. Von Milch abgeleitetes Magnesium/Calcium-Material mit den folgenden Eigenschaften:
(1) der Magnesium- und Calciumgehalt beträgt mehr als 13 Gew.-% der gesamten Feststoffe und
(2) die Magnesium- und Calciumsalze weisen keine eindeutige kristalline Struktur auf, wobei das von Milch abgeleitete Magnesium/Calcium-Material durch ein Verfahren gemäß einem der Ansprüche 1 bis 4 erhältlich ist.

6. Verwendung des von Milch abgeleiteten Magnesium/Calcium-Materials gemäß Anspruch 5 zur Herstellung eines prophylaktischen Getränks für Patienten mit Bedarf an erhöhter Magnesium- und Calciumaufnahme.

## Revendications

1. Procédé pour produire un matériau magnésium/calcium issu de lait, dans lequel on fait passer du lait ou des substances laitières à travers des résines échangeuses de cations faiblement acides, puis des résines échangeuses de cations fortement acides, après quoi le magnésium et le calcium qui sont adsorbés sur les résines échangeuses de cations fortement acides sont élués et recueillis sous la forme de sels de magnésium et de calcium.

2. Procédé selon la revendication 1, dans lequel le magnésium et le calcium qui sont adsorbés 'sur les résines' échangeuses de cations fortement acides sont élués en utilisant une solution contenant des minéraux et des acides organiques qui sont enlevés de lait ou de substances laitières, et obtenus en faisant passer le lait ou les substances laitières à travers des résines échangeuses de cations faiblement acides, puis des résines échangeuses de cations fortement acides, puis en électrodialysant l'effluent obtenu.

3. Procédé selon la revendication 1 ou 2, dans lequel le pH de la solution contenant du magnésium et du calcium qui sont élues des résines échangeuses de cations fortement acides est 'ajusté à 6,0 à 7,0 pour recueillir les sels de magnésium et de calcium sous la forme d'un précipité.

4. Procédé selon la revendication 1, 2 ou 3, dans lequel les sels de magnésium et de calcium recueillis sont mis en suspension dans de l'eau, puis purifiés par séparation par membrane ou centrifugation.

5. Matériau magnésium/calcium issu de lait ayant les caractéristiques suivantes :
(1) la teneur en magnésium et calcium est supérieure à 13 % en poids des matières solides totales, et
(2) les sels de magnésium et de calcium n'ont pas de structure cristalline distincte, de sorte que le matériau magnésium/calcium issu de lait est susceptible d'être obtenue par un procédé selon l'une quelconque des revendications 1 à 4.

6. Utilisation de le matériau magnésium/calcium issu de lait de la revendication 5, pour la préparation d'une boisson prophylactique pour des patients ayant besoin d'une absorption accrue de magnésium et de calcium.
